# EUROPEAN PATENT APPLICATION

(11) **EP 4 712 440 A1**
(43) Date of publication of application: **18.03.2026**
(21) Application number: 24807631.7
(22) Date of filing: 23.04.2024
(51) Int. Cl.: H04L 65/1069, H04W 76/11, H04W 88/14

(54) **METHOD AND APPARATUS FOR SUPPORTING ESTABLISHMENT OF PACKET DATA UNIT SESSION ON BASIS OF IMPORTANCE OF PACKET DATA UNIT SET IN WIRELESS COMMUNICATION SYSTEM**

(30) Priority: 12.05.2023 KR 20230061995
(71) Applicant: Samsung Electronics Co., Ltd., Suwon-si, Gyeonggi-do 16677 (KR)
(72) Inventor: RHYU, Sungryeul, Suwon-si, Gyeonggi-do 16677 (KR)
(74) Representative: Gulde & Partner
(86) International application number: PCT/KR2024/095760
(87) International publication number: WO 2024/237761

(57) **Abstract**

The present disclosure relates to a 5G or 6G communication system for supporting higher data transmission rates. According to the present disclosure, provided is a method for supporting processing of a protocol data unit (PDU) session on the basis of importance of a PDU set in an application function (AF) of a wireless communication system, the method comprising the operations of: transmitting a request message relating to the PDU session to a first entity of a 5G system (5GS); and receiving a response message from the first entity in response to the request message, wherein the request message includes at least one parameter representing the importance of the PDU set, and a value of the importance is one integer determined in a range of 0 to 15 on the basis of a frame type of the PDU set.

## Description

### [Technical Field]

The disclosure relates to a method for supporting establishment of a packet data unit (PDU) session in a wireless communication system and, more particularly, to a method and an apparatus for, when application data (e.g., eXtended Reality (XR) data) is transmitted as a payload of a packet in a wireless communication system, providing structural information of payload data so as to enable a transmission layer to effectively transmit the application data.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The 3rd Generation Partnership Project (3GPP) manages data transmission and communication in a wireless network by using a protocol stack composed of various layers. Among these, representative layers include an application layer, a protocol data unit (PDU) layer, a radio resource control (RRC) layer, a media access control (MAC) layer, and a radio link control (RLC) layer. The application layer is responsible for an interface between a user application and a wireless network, and the PDU layer defines a data transmission unit and provides a protocol for transmitting data in an IP network. The RRC layer manages wireless resources in a wireless link, the MAC layer performs media access control for data, and the RLC layer performs data transmission control.
- The application layer (application layer) is the highest layer in the 3GPP protocol stack, and serves as an interface between a user application and a wireless network. This layer is the layer closest to the user application and provides various protocols for satisfying the user's data requirements. For example, a hypertext transfer protocol (HTTP) is used as a protocol for a web service, and a session initiation protocol (SIP) is used as a protocol for a voice and multimedia service. A real-time transport protocol (RTP) is a protocol for transmitting multimedia data, and is used together with the SIP to transmit actual data in a multimedia session. Such a protocol is transmitted from the upper layer to the lower layer in order to process user data.
- The protocol data unit (PDU) layer encapsulates data into a data transmission unit used in 3GPP and provides a protocol for transmitting the data in an Internet protocol (IP) network. This layer includes multiple sub-layers, and each sub-layer deals with a data transmission method and a protocol. For example, a radio link control (RLC) sub-layer controls data transmission in a wireless link, and a media access control (MAC) sub-layer performs medium access control for data transmission in a wireless link. The PDU layer is used in a radio access network (RAN) and provides an interface between the radio access network and a core network.
- The radio link control (RLC) layer provides a control protocol for reliable data transmission through a wireless link between the radio access network and a user equipment (UE). The RLC layer is positioned between the PDU layer and the MAC layer, and performs functions such as data segmentation and assembly for data transmission, flow control, error control, sequence control, retransmission, and automatic repeat request (ARQ).
- The media access control (MAC) layer performs medium access control for transmitting data via a wireless link. The MAC layer is located between the RLC layer and the PDU layer, and is responsible for controlling a wireless link between the radio access network and the UE. This layer performs functions such as access control, scheduling, hardware processing, error control, and retransmission for sharing a radio channel, and determines the transmission priority, transmission period, and transmission format of data in a wireless link.
- The radio resource control (RRC) layer provides a protocol for managing wireless resources in a wireless link. The layer performs functions such as wireless resource allocation, wireless link configuration and release, and wireless link state management. RRC is the lowest layer, and is responsible for controlling a wireless interface between the user equipment (UE) and an ultra terrestrial radio access network (UTRAN). This layer handles transmission requirements between the UE and the radio access network, and is allocated resources of the radio access network.

These layers exchange data in the following manner.
- Data generated in the application layer is encapsulated into an IP packet in the PDU layer. The IP packet includes an IP address for routing and protocol information for transferring data. Thereafter, in order to transmit data over a wireless link, the MAC layer converts the IP packet into a MAC PDU, which is a format transmittable over a wireless link. In this case, the MAC PDU may be segmented into a smaller unit, that is, an RLC PDU, in a lower layer, that is, an RLC layer. The RLC PDU is a minimum transmission unit for performing functions, such as error control, sequence control, and retransmission, in the RLC layer.
- A packet name for data exchange between the application layer and the PDU layer is a non-access stratum (NAS) protocol data unit (PDU). This refers to a data packet transmitted over a wireless network.
- Data exchange between a packet data convergence protocol (PDCP) and the RLC is performed through segmentation and reassembly of transmitted packet data.
- Data exchange between the RLC and the MAC may differ according to the platform, but is generally performed through shared memory or a queue.
- Data exchange between the MAC and the RRC is performed via a wireless interface.

### [Detailed Description of the Invention]

### [Technical Problem]

Depending on the transmission method managed by a transmission layer, transmission errors of a transmission unit and drops caused thereby may occur. In this case, a drop of a PDU unit in the PDU layer may be caused by various reasons. For example, there may be a case in which PDU data is lost due to noise on a wireless link or wireless signal interference. In addition, there may be a case in which PDU transmission is delayed or interrupted due to a reason such as a bandwidth shortage of a wireless link or network congestion.

This PDU drop may cause a loss of user data. In particular, user data in the application layer is segmented into IP packets, MAC PDUs, RLC PDUs, and the like during the process of being transmitted through multiple layers, and then recombined and restored to the original user data. Therefore, if a drop occurs in the PDU layer, a part of the data fragments may be lost, and eventually, a part or all of the user data may be lost.

In 3GPP, various methods are provided to solve the above problem. For example, in the RLC layer, an automatic repeat request (ARQ) technology is used to retransmit data lost during PDU transmission, thereby guaranteeing lossless data transmission. In addition, when PDU data is lost due to noise on a wireless link, a hybrid automatic repeat request (HARQ) technology is used to quickly detect the loss and attempt retransmission, thereby ensuring lossless data transmission.

A loss rate caused in data transmission in the PDU layer may be referred to as a packet error rate (PER). The PER is usually represented as a percentage (%), and refers to the ratio of PDUs having failed to be correctly received at the reception side to transmitted PDUs. The PER may vary depending on various factors such as a wireless link state, a bandwidth, and a data transmission amount, and these factors may act together to cause a PDU drop.

3GPP provides various error control and retransmission technologies to minimize PER. For example, in the RLC layer, an ARQ technology is used to retransmit data lost during PDU transmission, thereby reducing the PER. In addition, when PDU data is lost due to noise on a wireless link, a HARQ technology is used to quickly detect the loss and attempt retransmission, thereby minimizing the PER. However, in a general wireless environment, it may be difficult to guarantee stable data transmission with a perfect PER, and therefore, 3GPP is considering an operation in the transmission layer, based on the understanding of user data, as one of the efforts to minimize a data loss rate in a wireless network.

When video data generated in the application layer is transmitted, the entire video data may be encapsulated into many RTP packets. In recent discussions, one RTP packet is associated with one PDU packet, a bundle of PDUs corresponding to frames of video data or slices configuring a frame is referred to as a PDU set, and performing a drop in units of PDU sets when performing a drop of a PDU in an inevitable situation is being considered. However, if reception of an RTP packet or a PDU packet that is a fragment of user data and a drop of a PDU set that is a bundle thereof are performed without understanding the entire user data, the reception side may fail to reproduce the user data, or if it is reproduced, a serious error may occur in the content.

Recently, in 3GPP, it is being discussed to define the unit of drop in the transmission layer as a PDU set by referring to an importance value of the PDU set, but how to determine the importance value has not been determined.

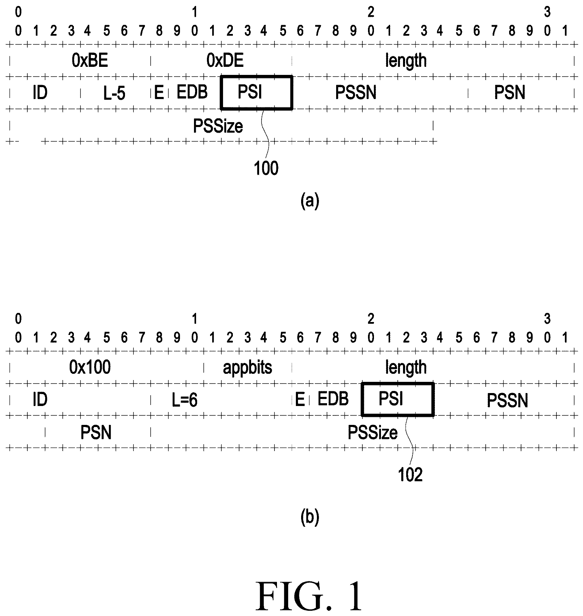

FIGS. 1A and 1B illustrate examples of a syntax of an RTP header extension (RTP HE) under discussion in the Internet engineering task force (IETF).

FIG. 1A illustrates a PDU set importance (PSI) 100 transmitted through a 1-byte RTP HE, and FIG. 1B illustrates a PSI 102 transmitted through a 2-byte RTP HE.

Therefore, a method for determining an importance value is required so that the PDU layer may determine and process a drop in units of PDU sets even without understanding the entire user data.

The disclosure relates to a method enabling more efficient transmission scheduling (e.g., burst transmission and drop) for user data in a lower transmission layer (e.g., PDU layer) even without understanding the structure of user data (e.g., video) which is data of an upper application layer (e.g., encoder). More specifically, the disclosure provides a method for determining an importance value, based on a certain unit layer structure of upper layer data and the effect between the components thereof. For example, in the case where data of the application layer is video data, when a video frame or a slice configuring the video frame is referred to as a component of the unit layer structure, an importance value may be determined, based on the effect of one frame on another frame, or the effect of one slice on another slice.

The importance value determination method of the disclosure is based on the premise that the importance value is transferred to the transmission layer and is referenced as a basis for a drop operation in the transmission layer. According to the intent of the disclosure, the transmission layer may select a PDU set that may be dropped in the transmission layer's delay budget and identify the extent to which the drop in the transmission layer affects the user experience of the application layer, based on importance information even without understanding of the media type of application layer data or without separate support information.

### [Technical Solution]

The disclosure proposes a method for supporting, by an application function (AF), processing of a protocol data unit (PDU) session, based on importance of a PDU set, in a wireless communication system, the method including transmitting a request message for a PDU session to a first entity of a 5G system (5GS), and receiving a response message from the first entity, in response to the request message, wherein the request message includes at least one parameter that represents importance of a PDU set, and wherein a value of the importance is one integer determined in a range of 0 to 15, based on a frame type of the PDU set.

The disclosure proposes an application function (AF) device for supporting processing of a protocol data unit (PDU) session, based on importance of a PDU set, in a wireless communication system, the AF device including a transceiver and a processor configured to control the transceiver, wherein the processor is configured to transmit a request message for a PDU session to a first entity of a 5G system (5GS), and receive a response message from the first entity, in response to the request message, wherein the request message includes at least one parameter that represents importance of a PDU set, and wherein a value of the importance is one integer determined in a range of 0 to 15, based on a frame type of the PDU set.

The disclosure proposes a method for supporting, by a first entity, processing of a protocol data unit (PDU) session, based on importance of a PDU set, in a wireless communication system, the method including receiving a request message for a PDU session from an application function (AF) and transmitting a response message to the AF, in response to the request message, wherein the request message includes at least one parameter used for representing importance of a PDU set, and wherein a value of the importance is one integer determined in a range of 0 to 15, based on a frame type of the PDU set.

The disclosure proposes a first entity device for supporting processing of a protocol data unit (PDU) session, based on importance of a PDU set, in a wireless communication system, the first entity device including a transceiver and a processor configured to control the transceiver, wherein the processor is configured to receive a request message for a PDU session from an application function (AF), and transmit a response message to the AF in response to the request message, wherein the request message includes at least one parameter used for representing importance of a PDU set, and wherein a value of the importance is one integer determined in a range of 0 to 15, based on a frame type of the PDU set.

The disclosure proposes a method for supporting, by an access & mobility management function (AMF), establishment of a protocol data unit (PDU) session, based on importance of a PDU set, in a wireless communication system, the method including receiving a PDU session establishment request message from an application function (AF) and transmitting a response message to the AF, in response to the request message, wherein the request message and the response message include at least one parameter used for representing importance of a PDU set.

The disclosure proposes an access & mobility management function (AMF) device for supporting establishment of a protocol data unit (PDU) session, based on importance of a PDU set, in a wireless communication system, the AMF device including a transceiver and a processor configured to control the transceiver, wherein the processor is configured to receive a PDU session establishment request message from an application function (AF), and transmit a response message to the AF, in response to the request message, and wherein the request message and the response message include at least one parameter used for representing importance of a PDU set.

The disclosure proposes a method for supporting, by an application function (AF), establishment of a protocol data unit (PDU) session, based on importance of a PDU set, in a wireless communication system, the method including transmitting a PDU session establishment request message to an access & mobility management function (AMF) and receiving a response message from the AMF, in response to the request message, wherein the request message and the response message include at least one parameter used for representing importance of a PDU set.

The disclosure proposes an application function (AF) device for supporting establishment of a protocol data unit (PDU) session, based on importance of a PDU set, in a wireless communication system, the AF device including a transceiver and a processor configured to control the transceiver, wherein the processor is configured to transmit a PDU session establishment request message to an access & mobility management function (AMF) and receive a response message from the AMF, in response to the request message, and wherein the request message and the response message include at least one parameter used for representing importance of a PDU set.

### [Advantageous Effects]

According to the disclosure, a transmission layer is allowed to use structural information, such as the importance of application data, thereby enabling drop of a data unit based on a priority and thus enabling efficient utilization of transmission resources.

### [Brief Description of Drawings]

FIGS. 1A and 1B are diagrams illustrating examples of a syntax of an RTP header extension (RTP HE) under discussion in the Internet engineering task force (IETF).
FIG. 2 is a diagram illustrating an example of a reference relationship between frame types according to the disclosure.
FIG. 3 is a diagram illustrating an example of detailed types of a P frame and a B frame according to the disclosure.
FIG. 4 is a diagram illustrating a method of determining the importance of each frame type in the case of 4-bit allocated importance representation according to the disclosure.
FIG. 5 is a diagram illustrating a method of assigning importance in consideration of a frame type and a POC number of video data according to the disclosure.
FIG. 6 is a diagram illustrating an example of a PDU session establishment procedure using importance negotiation according to the disclosure.
FIG. 7 is a diagram illustrating an example of a method of supporting, by an AMF, PDU session establishment, based on the importance of a PDU set according to the disclosure.
FIG. 8 is a diagram illustrating an example of a method of supporting, by a 5GMS AF, PDU session establishment, based on the importance of a PDU set according to the disclosure.
FIG. 9 is a diagram illustrating an example of a method of transferring, by a 5GMS AS, media data to a transmission layer, based on the importance of a PDU set according to the disclosure.
FIG.10 illustrates a device structure of a network entity according to the disclosure.

### [Mode for Carrying out the Invention]

Hereinafter, an embodiment of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

In the following description, a base station is an entity that allocates resources to terminals, and may be at least one of a gNode B, an eNode B, a Node B (or xNode B (where, x is an alphabet including g or e)), a wireless access unit, a base station controller, a satellite, an airborne, and a node on a network. A user equipment (UE) may include a mobile station (MS), a vehicular, a satellite, an airborne, a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Additionally, a "sidelink (SL)" may exist, which refers to a radio link via which a UE transmits a signal to another UE.

Furthermore, in the following description, LTE, LTE-A, or 5G systems may be described by way of example, but the embodiments of the disclosure may also be applied to other communication systems having similar technical backgrounds or channel types. For example, 5G-Advance, NR-Advance, or 6th generation (6G) mobile communication technologies developed beyond 5G mobile communication technologies (or new radio (NR)) may be included therein, and in the following description, the "5G" may be the concept that covers the exiting LTE, LTE-A, or other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

The disclosure provides a method describing a certain unit layer structure of upper layer data and the effect between the components thereof. For example, the disclosure describes the effect of one frame on another frame, or the effect of one slice on another slice when a video frame or a slice configuring the video frame is referred to as a component of the unit layer structure in the case where data of the application layer is the video data. The extent of the effect is referred to as importance in the disclosure. A data unit having a high importance is preferably processed at a high priority in the application layer and the transmission layer.

### [Embodiment] Method for determining importance according to type and reference relationship

Compression of video data is achieved by indicating to reference a previously recorded image segment, instead of repeating a duplicated image segment. The position of indication information used for such an indication and a target to be indicated may be a region of a frame or a slice.

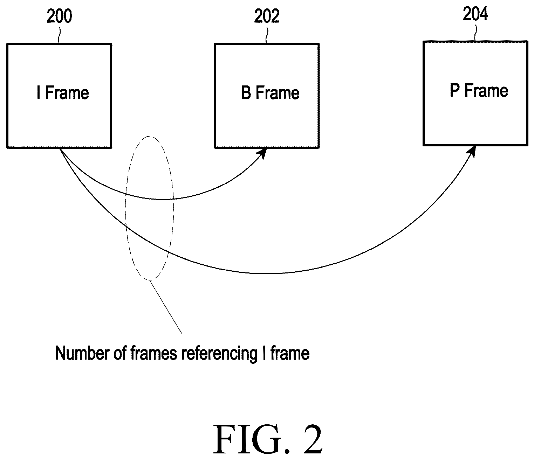

FIG. 2 is a diagram illustrating an example of a reference relationship between frame types according to the disclosure.

For example, an I frame 200 of a video is a target referenced by a P frame 204 or a B frame 202. The P frame 204 may be referenced by another P or B frame 202, and the B frame 202 may be referenced by another B frame or may not be referenced by any frame. When a relationship in which a certain frame (first frame) is referenced by a different frame (second frame) is established as described above, the transmission error or omission of the first frame in an operation of the second frame may be a greater problem than in the opposite case (i.e., transmission error or omission of the second frame in an operation of the first frame). The more the number of frames referencing the first frame, the more important the first frame may be said to be.

In the disclosure, importance may be determined, as described above, based on how many reference relationships are established between components.

An entity that determines importance in the disclosure may represent, by an integer, the importance of each hierarchical component (e.g., a frame or a slice) based on the reference relationship for the component, and may determine an importance value by considering the type, number, and size of other components of different hierarchical components affected by the omission of the corresponding hierarchical component.

Considering the type of a hierarchical component, in a case of video data, the above-described I, P, and B frames may be more finely classified.

I-clean random access (CRA) and I-instantaneous decoding refresh (IDR) are detailed classifications of I frames. IDR is a frame that is decodable independently without referencing previous frames, whereas CRA may have a dependency on previously transmitted data because some of reference frames are retained.

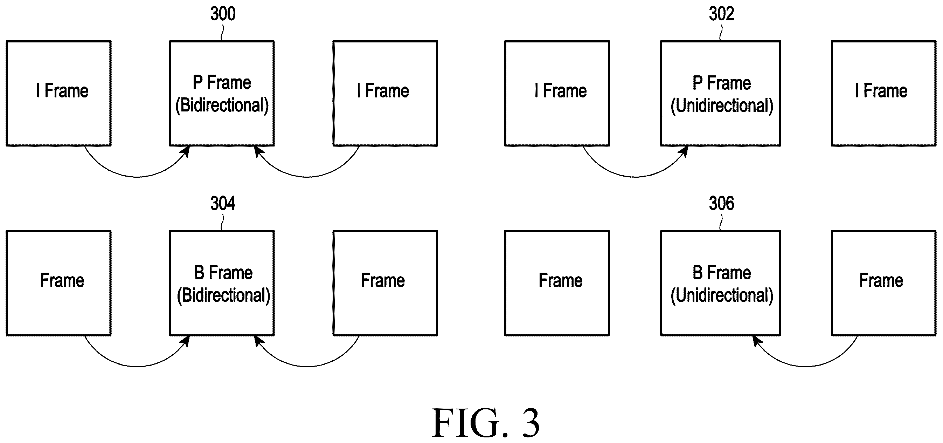

FIG. 3 is a diagram illustrating an example of detailed types of a P frame and a B frame according to the disclosure.

Random access decodable leading (RADL) and random access skipped leading (RASL) are detailed classifications of a P frame, and RADL references only the previous frame and indicates to a starting point from which the previous frame and the current frame are decodable, whereas RASL indicates that the current frame is a starting point of decoding.

In addition, a P frame may be additionally classified into P-Unidirectional 302 and P-Bidirectional 300, and P-Unidirectional and P-Bidirectional are distinguished depending on whether the P frame is predicted from the preceding I frame or also from the following I frame.

A B frame is a frame predicted from an I frame, a P frame, or another B frame, and is generally characterized in that no other frame is predicted from the B frame. However, in recent video coding, there may be another frame referencing a B frame, and the B frame may be classified as B-Unidirectional 306 or B-Bidirectional 304 depending on whether the B frame is referenced by the following frames or also by the preceding frames. B-Non-Referenced means that no other frame references the corresponding B frame.

Considering the above types, if the types of frames having independent information are first listed, followed by the types of frames having more referenced directions as a next priority, the order is as follows: I-IDR, I-CRA, RASL, P-Bidirectional, P-Unidirectional, RADL, B-Bidirectional, B-Unidirectional, and B-Non-Referenced. Therefore, the above order is used in the disclosure as an example of prioritizing types of frames. In the case of a slice, there are PI, PP, PB, BI, BP, and BB slices, and the order thereof is used in the disclosure as an example of prioritizing slice types. However, the priority may be adjusted according to an application program or whether generation and consumption are real-time or non-real-time, and prioritization based on the data type and importance indication in the application layer depends on the purpose and necessity of the application program. For example, the priority of the type of the frame may be adjusted in the order of I-IDR, I-CRA, RADL, P-Bidirectional, P-Unidirectional, RASL, B-Bidirectional, B-Unidirectional, and B-Non-Referenced.

A frame and a slice are distinguished according to whether the unit of a target referenced thereby is a frame or a slice obtained by dividing the region within a frame, and thus become a criterion for determining whether a drop affects the entire frame or a part of the frame. Therefore, when the same number of frames or slices reference the current frame or slice, since a frame has a greater effect than a slice, it is preferable to determine that the frame has a higher priority.

If there are many frames referencing a frame is large, this implies that the number of frames affected by a drop of the referenced frame is large. Therefore, at the time of importance determination in the disclosure, the number of frames referencing the frame may be considered as a comparison criterion in addition to prioritization of frame or slice types.

When multiple video streams reference each other to produce multiple decoding results, it is preferable to compare and determine the type and the number of references over the entire related streams as described above.

### [Embodiment] Mixed representation method of absolute value and relative value

The disclosure provides a method for configuring importance as a combination of absolute and relative values within a given range.

The representation method and range of an importance value proposed in the disclosure may be determined through negotiation between an entity that determines (or decides) importance and an entity that operates based on the provided importance. For example, the application layer (an entity that determines importance) may determine the number of levels for representing the importance of data to be transmitted, according to the type of the data and the needs of an application program, and the transmission layer (an entity that operates based on importance) may operate by assigning transmission priorities for the importance levels determined through negotiation.

In the representation method of an importance value proposed in the disclosure, an absolute value region and a relative value region may be separated. When the range is determined through negotiation between the entities, a value that is always determinable without relative value comparison becomes the highest value and the lowest value. The disclosure proposes to designate absolute values described above (e.g., the lowest value and the highest value, or the highest value and the lowest value) for the most important data and the least important data, so as to enable an importance-based operation without separate additional comparison. Therefore, the importance representation method according to the disclosure may enable the most important data and the least important data to always have the same values.

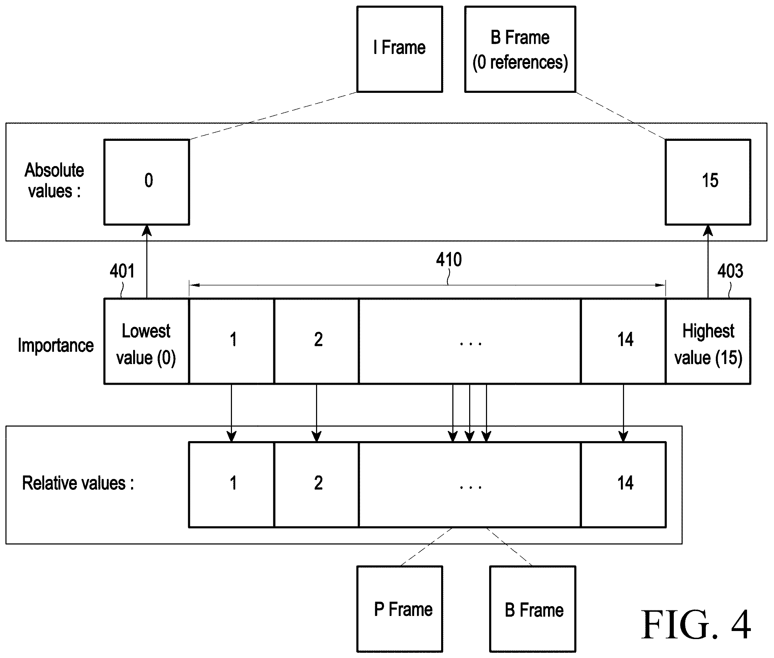

FIG. 4 is a diagram illustrating a method of determining the importance of each frame type in the case of 4-bit allocated importance representation according to the disclosure.

For example, when importance is represented using 4 bits, the range of possible numbers is 0 to 15 (= 2⁴-1), and a highest value 403 is 15 and a lowest value 401 is 0 in the range. In a system that operates by recognizing that information with an importance of 0 is the most important information and information with an importance of 15 is the least important information, the importance of the most important information such as an I frame is designated as 0, and the importance of information, such as a B-Non-Referenced frame, which has no effects on other frames even if dropped may be designated as 15. Based on data received from the upper application layer (entity that designates importance) and importance information on the data, when the transmission layer (entity that performs an operation according to designated importance) needs to give up transmission of the data and execute a drop thereof in an inevitable situation, if there is data having an importance of 15 among data having various importances, the transmission layer may immediately execute a drop without further comparison, and if there is data having an importance of 0, may secure other resources for transmission of the data or drop other data without further comparison of the data.

The entity that designates importance or the entity that performs an operation according to designated importance may allocate fewer bits or more bits for importance representation. For example, the highest value and the lowest value are designated as absolute values in the disclosure, so in the case of 3 bits, 7 (= 2³ - 1) and 0 may be used, and in the case of 5 bits, 31 (= 2⁵ - 1) and 0 may be used.

In a relative value section 410, the importance of a more important or less important data unit may be assigned according to, as described above, whether a target is a frame and a slice, a priority according to the type of the frame or slice, and an order according to the number of references in the same type. An importance that a specific number of references of a specific type needs to have is not determined in the relative value section, and only I frames and B-non-referenced frames may be arranged in absolute value sections (i.e., the lowest value 401 and the highest value 403).

### [Embodiment] Method of displaying effect level in real time

In real-time application programs such as video calls, data may have no reference information on the future direction from the transmission time point, that is, in the direction of the next frame. Accordingly, both the direction and the number of references may be measured based on already transmitted data. In such an application program, video data may be configured by only an I frame and multiple P frames. Each P frame may be configured by referencing the previously transmitted I frame and P frames. A picture order count (POC) number is a field indicating the frame sequence number of each of the frames from the I frame to the current frame, and in the disclosure, assigning importance by considering a POC number is proposed.

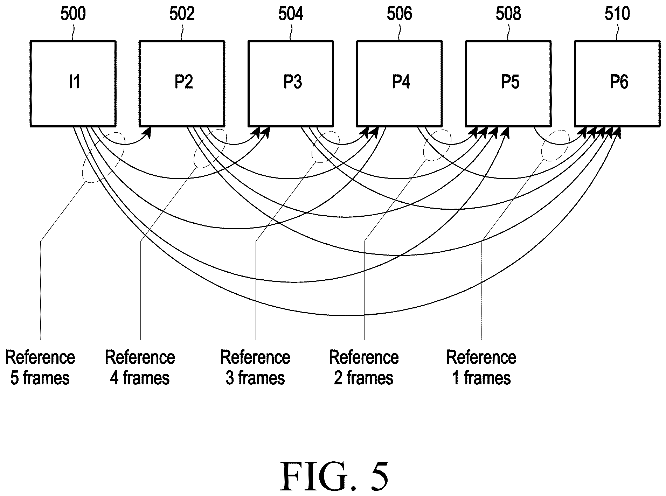

FIG. 5 is a diagram illustrating a method of assigning importance in consideration of a frame type and a POC number of video data according to the disclosure.

For example, when I1 500 is a first frame and an I frame, P2 502 is a second frame and a P frame, and P3 504 is a third frame and a P frame, P2 502 may be generated by referencing I1 500, P3 504 may reference I1 500 and P2 502, and P4 506 may be generated by referencing I1 500, P2 502, and P3 504. That is, P2 502 is a frame referenced by all remaining P frames (e.g., frames 504, 506, 508, 510, . . .) in a group of pictures (GOP) starting from P3 504, and P3 504 is a frame referenced by all remaining P frames (e.g., 506, 508, 510, . . . ) in the GOP starting from P4 506. Therefore, the POC and the dependency may be regarded as having a strong correlation with each other. In this example, in the disclosure, it is determined that I1 500 is the most important frame required for the generation of all the other P frames 502, 504, 506, 508, and 510, and I1 500 is allowed to have 0 as an importance value in an absolute value range. In addition, P2 502 is determined to have more reference frames than P3 504, and P3 504 is determined to have more reference frames than P4 506. Therefore, it is reasonable to compare P2 502, P3 504, and P4 506 in a relative value range, and to assign relatively different importances as 1, 2, and 3.

If a decoding order different from a transmission order is provided, it may be determined that other frames prior to a certain frame in the decoding order need to be decoded first in order to decode the certain frame. Relatively higher importance may be assigned to the prior frames in the decoding order.

### [Embodiment] Method for preventing same value from being continued: Sliding window

In the importance assignment method of the disclosure, importance is assigned by assigning an absolute value or a relative value according to the type of a frame and the number of references. However, in some cases, different frames having the same relative importance may occur. In this case, from the viewpoint of an entity (e.g., the transmission layer) that receives the assigned importance and operates based thereon, reception of different data units having the same relative importance may require separate information in order to determine an appropriate operation. In order to minimize such a case, it is proposed to provide a sliding window having a size of N and prevent the same relative importance value from occurring in at least N data units, through pre-negotiation between entities (e.g., between the application layer and the transmission layer) or dynamic negotiation according to situations. The N-sized sliding window means preventing data units having the same importance from occurring in N consecutive data units.

For example, when N is 4, if the occurrence of frames having the same relative importance is prevented among four consecutive frames, the transmission layer may determine whether a drop is required for every four consecutive frames, and when a drop is required, a frame having the lowest importance among the four frame may be dropped.

The size N of the sliding window may be determined by the application layer according to a characteristic of an application program, for example, as the size of a GOP, or may be determined by the transmission layer according to the situation of a transmission network, for example, as the number of PDU sets which may be included in a delay budget. The size of the sliding window may be dynamically negotiated and changed between entities according to a generation time point of a PDU session generation or a network situation.

Assuming that the range of importance is [0, k], that is, 0 to k may be represented, and a sliding window size value previously or dynamically negotiated and determined is N smaller than k, that is, the expression 0 < N < k holds, an operation method according to the disclosure is as follows. Here, in case of a 3-bit allocated importance representation, k may be 7, in case of a 4-bit allocated importance representation, k may be 15, and in case of a 5-bit allocated importance representation, k may be 31.

An entity that determines importance may first determine a frame type designated to have an absolute value among N data units. I frames and B-non-referenced frames may be designated to have absolute values. Assuming that there are m frames designated to have absolute values, the number of remaining frames is N - m.

Next, the entity that determines importance may determine a priority, based on the type of a frame and the number of reference relationships, described above, among the remaining frames. When N-m is in a relative value section of [1, k-1] within the entire importance range k, the importances thereof may be mapped to [1, N-m] such that the importances increase by 1 according to the priorities thereof.

In an example, in a 4-bit allocated importance representation range in which k (i.e., the highest value) is 15, if I1, P2, P3, and P4 frames are included, N is 4, and m is 1, (N-m) (i.e., 4-1=3) relative importances may be assigned to P frames, B-Bidirectional, B-unidirectional, or P or B slices remaining after a frame is designated as an I frame or B frame. In this case, the importances may increase by 1 starting from 1 according to the priorities thereof, and P2, P3, and P4 may be mapped to 1, 2, and 3, in a [1, 3] section respectively. The importances of 0, 1, 2, and 3 are assigned to I1, P2, P3, and P4 in the sequence of the frames.

As an example, a case in which a new frame P5 is included as the next frame and the recent four units, that is, P2, P3, P4, and P5, which are N units, are evaluated will be described. P5 has been written in reference to I1, P2, P3, and P4 in the above example, and thus, there is no frame designated to have an absolute value among frames P2, P3, P4, and P5. Therefore, m is equal to 0 (m=0), the importances of 1, 2, 3, and 4 may be assigned to a relative value section [1, 4], respectively. Since the section is represented by only relative values and does not absolute values, the transmission layer (i.e., an entity that operates based on importance) may determine a drop of P5 having an importance of 4 that is the lowest importance.

In the process in which importance is assigned to consecutive frames, a start value of a relative value section for N importances may be a value other than 1. For example, when importance is assigned to a section of [11, 14], the next frame is unable to use an absolute value of 15, so reassignment of the importance value is required.

In order to prevent this, if the minimum value of the importance values of N frames after the highest value (e.g., 14 in the case of a 4-bit allocated importance representation range) of the relative value section is k-1-(N-1) (in other words, if the minimum value is 11 obtained after subtracting (4-1) from a relative value range maximum value of 14 obtained by subtracting, from 15 (=k), 1 which is the number of an absolute value range maximum value of 15), that is, if 11, 12, 13, and 14 are consecutively indicated as importance, the importance of the corresponding frames may be interpreted from the indicated importance values.

In a case where the importance of a frame after a frame having an importance value of 14 in a sliding window is to be indicated as an importance lower than 14 (i.e., a higher importance value), the importance of the frame may be determined to be represented as a value of 10 to 12. For example, if the importance value is represented as 10, this may imply that the frame has an importance of 10 + N(4) + 2 and thus is lower than 14. If the importance value is represented as a number other than 10 to 13, for example, 2, this may imply that the frame has an importance of 2 and is thus more important than the remaining frames having the importances of 12, 13, and 14.

In other words, if the importance of a frame subsequently provided after transmission of a frame including the highest value (e.g., 14) of the relative value section is equal to or greater than a value obtained by subtracting N from the highest value of the relative value section (10, 11, and 12 equal to or greater than 14-4=10), the frame may be considered as having an importance of a value (10+N+2=16) obtained by adding N+2 to the importance while the highest value (14) of the relative value section is included in N frames.

Table 1 below lists examples of interpretation of importance values in a case of a sliding window N = 4 in a 4-bit importance representation scheme.

**[Table 1]**

| |
|---|
| [1,2,3,4] -> |
| [2,3,4,5] -> ... -> |
| [9,10,11,12] -> |
| [10,11,12,13] -> |
| [11,12,13,14] -> |
| [12,13,14,10 (the importance 10 of a frame after the importance 14 is interpreted as the importance 16)] -> |
| [13,14,10(interpreted as 16),11(the importance 11 of a frame after the importance 14 is interpreted as the importance 17))] -> |
| [14,10(interpreted as 16),11(interpreted as 17),12(the importance 12 of a frame after the importance 14 is interpreted as the importance 18)] -> |
| If the highest value (14) of the relative value section is absent in N sections, a corresponding importance is interpreted as the numerical value itself. |
| -> [10,11,12,13] -> ... |
| If the highest value (14) of the relative value section is present in N sections and the importance of a subsequent frame is smaller than a value obtained by subtracting N from the highest value (is equal to or smaller than 9), the importance is interpreted as the numerical value itself. |
| [1,2,3,4] -> [2,3,4,5] -> ... -> [9,10,11,12] -> [10,11,12,13] -> [11,12,13,14] -> [12,13,14,8] -> [13,14,8,9] -> .. |

### [Embodiment] Method of negotiating importance between transmission layer and application layer

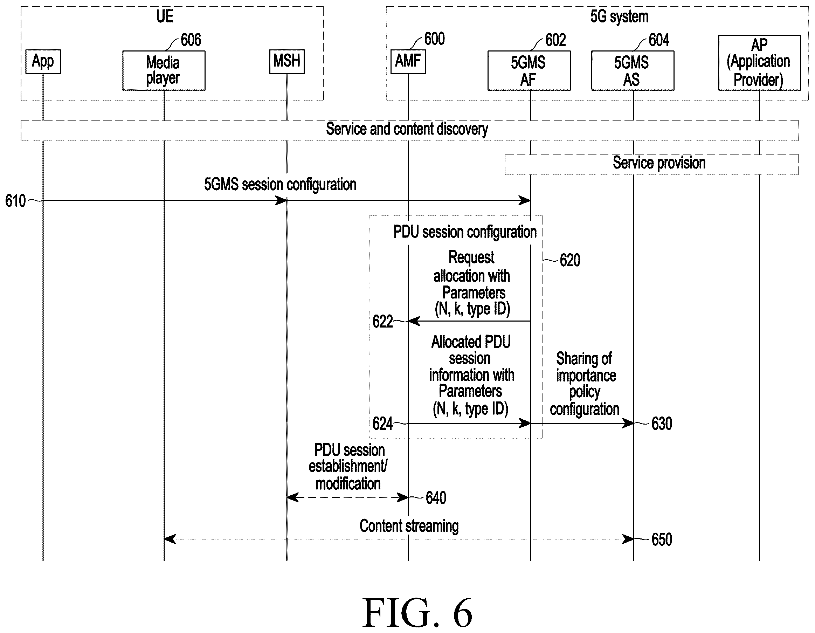

FIG. 6 is a diagram illustrating an example of a PDU session establishment procedure using importance negotiation according to the disclosure.

Data transmitted by the application layer is transmitted through a PDU session of the transmission layer. The PDU session may be established through at least one of a generation request 610, processing (session allocation) 620, allocation information transmission 630 to a 5GMS application server, and an activation operation 640 between a media session handler (MSH) of a UE and an AMF.

An available PDU session may be searched for through communication 622 and 624 between an application function (AF) 602 of 3GPP system architecture 4 (SA4) and an access and mobility management function (AMF) 600 of system architecture 2 (SA2), and if necessary, the AMF 600 may perform an operation of allocating a session, returning allocation information, and activating the session.

In the disclosure, additional information transferred by the 5G media stream (5GMS) AF 602 to the AMF 600 for the session allocation (operation 622) may include at least one of a range (k value) of an importance value, an importance representation format (a combination of an absolute value and a relative value, an absolute value, a relative value, or another format), and a size (N value) of a sliding window. Alternatively, if at least one of the above pieces of information may be collectively normalized as a profile and a representative identifier is assigned to the profile, the information included in the identifier may determine all of k, N, and an importance representation type. For example, if a PDU set configuration ID is 0, the meaning of a corresponding profile may be normalized to indicate that k is 4 bits, N is 4, and the representation format is a combination of an absolute value and a relative value.

When allocation information of a PDU session is different from a presented profile, the transmission layer may transfer the allocation information in the process 624 of transmitting allocation information from the AMF 600 to the AF 602. The allocation information to be added may include at least one of a range (k value) of an importance value, an importance representation format (a combination of an absolute value and a relative value, an absolute value, a relative value, or another format), and a size (N value) of a sliding window, described above. The AMF 600 may determine the maximum number of PDU sets that may be included in a budget, in consideration of a PDU set delay budget and a transmission network situation, and may transfer the number of different PDU sets that may exist in one delay budget as a k value, so as to request the application layer to provide at least k different importances.

In a case of a service requirement-based method, the transmission layer has a pre-defined PDU set delay budget value according to a quality of service (QoS) characteristic, and may classify and determine PDU set delay budgets in a 5G network as several to several to tens of milliseconds, and select k ranges of importance levels suitable for each QoS. Alternatively, in the case of ultra-reliable low-latency communications (URLLC) which operates with latency as the highest priority, a flexible PDU set delay budget is used to support a flexible QoS. Therefore, a result of dynamically adjusting a k value and performing allocation through communication between the AF and the AMF, that is, a suitable range of an importance value, may be returned. The AF may transfer an importance parameter to the application server (AS) 604, and may include a frame-specific importance value of media streamed from the AS 604 and transfer same to a media player 606 of the UE (operation 650).

### [Embodiment] Specification proposal

In 3GPP discussion, multiple methods of assigning a value of importance have been discussed as a guideline, and the content of one discussion is as follows in Table 2 below.

**[Table 2]**

| |
|---|
| 3.1.3.3 PDU set importance based on associated (affected) PDU sets |
| When the transmission layer needs to immediately drop or discard a PDU set but has freedom of selection among PDU sets, a PDU set with a smaller degree of artifact generally becomes a better choice. Even if a PDU set has already been completely transmitted to the reception side or is still in a queue waiting to be transmitted, dropping the PDU set may damage the decoded output of the PDU set itself and other PDU sets. The degree of artifact may be explicitly transferred from the application layer to the transmission layer as the number of affected frames which precedes/follows the PDU set, or implicitly transferred as an importance value. A lower value means that more PDU sets are affected and a higher value means that proportionally fewer PDU sets are affected. Considering that the quantization of various affected PDU sets may be translated into an importance field, 4 bits may be used to represent 16 possible size ranges. (When the transport layer is forced to perform immediate dropping/discarding of a PDU set but has a freedom of selection among the PDU sets, the PDU set with smaller degrees of artifact would be the better choice in most cases. Dropping of a PDU set may corrupt the decoded output of itself and the other PDU sets though they may already be transmitted perfectly to the receiving end or yet in a queue waiting to be transmitted. The degrees of artifact can be explicitly transferred from the application layer to the transport layer as the number of affected frames which precedes/follows the PDU set, or can be implicitly transferred as the importance value where the lower value means the higher PDU sets are affected while higher values proportionally mean less number of PDU sets are affected for example. By |
| considering such a quantization of various affected PDU sets can be translated into importance field, using 4 bits to represent 16 possible size ranges is recommended.) Information on the size of propagation error caused by the dropping of each PDU set may be provided from the application layer to the transmission layer. This information may implicitly represent the size of error propagation with a proportional mapping of the error propagation size to an index such as the PDU importance configured in the media stream. (The information on the size of propagation error which caused by the dropping of each PDU set may be provided by the application layer to the transport layer. The information may present the size of error propagation implicitly with a proportional mapping of error propagation size to an index such as the importance of the PDU set in the media stream.) |
| In a PDU set information RTP header extension (HE), the importance value of a PDU set is set as follows. (The importance value of a PDU Set in PDU set information RTP HE is set as follows) |
| > The error propagation size is mapped to an importance field value. For example, the importance value 15 (b1111) means that one frame is not referenced by other frames and is affected (i.e., itself), such as a B frame, and the importance value 0 may mean an I frame or a frame type that affects 15 or more frames. (The error propagation size is mapped to importance field value. For e.g., importance value 15 (b1111) means one frame (self) is affected such as B-frame with no other frame dependent to it, importance value 0 means it carries I-frame, or other types of frames having more than 15 frames affected.) |

According to the proposal of the disclosure, if importance is provided as a combination of an absolute value and a relative value, a method of comparing importance in relative values is based on a type and a dependency, and an allocation method for preventing continuous frames from having the same value is added, it may be represented by adding a guideline as in Table 3 below.

**[Table 3]**

| |
|---|
| 3.1.3.4 PDU set importance in absolute and relative notations |
| In order to make an instant decision in the transmission layer, it is proposed to indicate the most important frame and the least important frame by using an absolute value representation such as the lowest value and the highest value. For example, when 4 bits are allocated for importance, the value 0 always means that |
| an I frame is transferred, and the value 15 always means that a B frame (which has no other frame dependent on itself and therefore does not affect other PDU sets) is transferred. A P or B frame, and an I/P/B slice which other frames or slices depend on (i.e., which is referenced by the other frames or slices) may be ordered in the range from 1 to 14 according to the types of frames/slices and the number of dependent (reference) frames/slices. (For instant decision to be made in the transport layer, it is proposed to indicate the most important frame and the least important frame by using absolute value representation for such as the lowest value and the highest value. In case 4 bits are allocated for importance, the value 0 always means that it carries I-frame and the value 15 always means it carries B-frame which has no other frame dependent to itself therefore occurring no impact to other PDU sets. P, B frames and I/P/B slices that have other frames or slices dependent to themselves will be ordered by the types of frames/slices and the number of dependent frames/slices in the range from 1 to 14.) |
| In a PDU set information RTP header extension (HE), the importance value of a PDU set is set as follows. (The importance value of a PDU Set in PDU set information RTP HE is set as follows) |
| > For a 4-bit importance field, the frame types I and B (which has no reference frames) may be mapped to the absolute values 0 and 15, respectively. (The frame type I and B (which has no referenced frames) are mapped to absolutely 0 and 15 for 4 bits importance field.) |
| > The frame types may be numbered in ascending order from RASL as the most important, followed by P-bidirectional, P-unidirectional, RADL, B-bidirectional, and B-unidirectional as the least important. (The type of frames are numbered in ascending order from RASL as the more important one, P-Bidirectional, P-Unidirectional, RADL, B-Bidirectional, and B-Unidirectional as the less important one.) |
| > Alternatively, the frame types may be numbered in ascending order from RADL as the most important, followed by P-bidirectional, P-unidirectional, RASL, B-bidirectional, and B-unidirectional as the least important. (Alternatively, the type of frames are numbered in ascending order from RADL as the more important one, P-Bidirectional, P-Unidirectional, RASL, B-Bidirectional, and B-Unidirectional as the less important one.) |
| > The slice types may be numbered in ascending order from PI slice as the most |
| important, followed by PP, PB, BI, BP, and BB slices as the least important. (The type of slices are numbered in ascending order from PI-slice as the more important one, PP, PB, BI, BP, and BB slices as the less important one.) |
| > The number of dependent frames/slices may serve as a second criterion to compare subsequent frames with the same type. (The number of dependent frames/slices to themselves are the second criteria to compare subsequent frames with the same type.) |

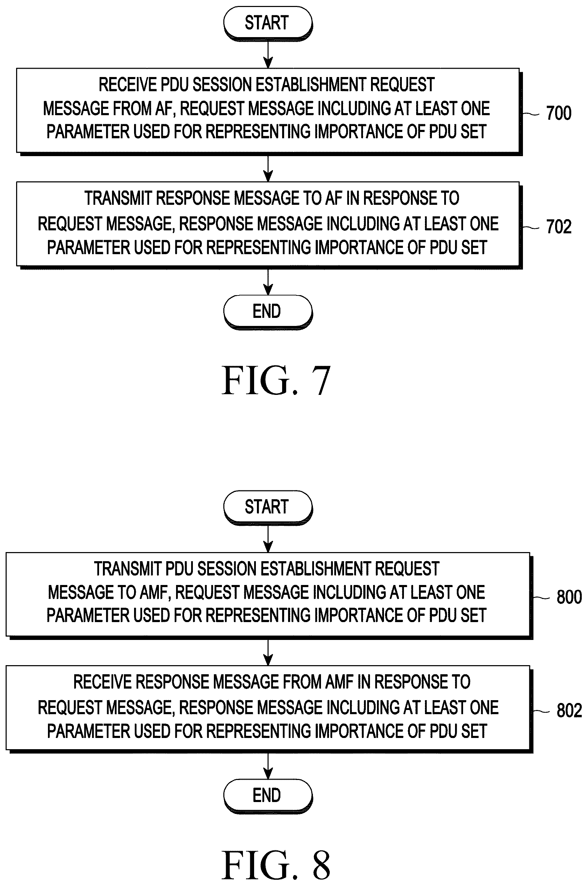

FIG. 7 is a diagram illustrating an example of a method of supporting, by an AMF, PDU session establishment, based on the importance of a PDU set according to the disclosure.

An AMF may receive a PDU session establishment request message from the AF (operation 700 or 622). The AF may be an AF having received a request 610 for configuring a 5G media stream (5GMS) session from an application of a UE. The request message may include at least one parameter used for representing importance of a PDU set.

The AMF may transmit a response message to the AF in response to the request message (operation 702 or 624). The response message may include at least one parameter used for representing importance of a PDU set.

The at least one parameter may include N which is a size of a sliding window, k which indicates a range of an importance value, and importance representation type indication information. Here, the sliding window is a window previously configured to prevent the same value from being included among N importance values.

The at least one parameter may be a PDU set configuration ID, and the PDU set configuration ID may identify a combination of N which is a size of a sliding window, k which indicates a range of an importance value, and importance representation type indication information.

For example, the PDU set may be classified as a unit of a frame of video data, and in a case where the importance is represented by 4 bits, an I frame may be configured to have an importance of 0, and a B frame that does not affect other PDU sets may be configured to have an importance of 15. In addition, a P frame, a B frame, an I slice, a P slice, and a B slice referenced by other frames or slices may have a value in a range from 1 to 14 according to the types of frames or slices and the number of reference frames or slices. In addition, the value of the importance may be designated as a different value according to the frame type, and may have an increasing (ascending) value in the order of random access skipped leading (RASL), P-bidirectional, P-unidirectional, random access decodable leading (RADL), B-bidirectional, and B-unidirectional. In addition, the value of the importance is designated as a different value according to the frame type, and may have a value that increases in the order of RADL, P-bidirectional, P-unidirectional, RASL, B-bidirectional, and B-unidirectional. In addition, the value of the importance may be designated as a different value according to the slice type, and may have a larger value in the order of a PI slice, a PP slice, a PB slice, a BI slice, a BP slice, and a BB slice. Furthermore, for different frames having the same frame type, a corresponding frame may have a larger value when the number of other frames referencing the frame is smaller.

FIG. 8 is a diagram illustrating an example of a method of supporting, by a 5GMS AF, PDU session establishment, based on the importance of a PDU set according to the disclosure.

An AF may transmit a PDU session establishment request message to an AMF (operation 800 or 622). The AF may be a 5GMS AF having received a request 610 for configuring a 5G media stream (5GMS) session from an application of a UE. The request message may include at least one parameter used for representing importance of a PDU set.

The AF may receive a response message from the AMF in response to the request message (operation 802 or 624). The response message may include at least one parameter used for representing importance of a PDU set.

The at least one parameter may include N which is a size of a sliding window, k which indicates a range of an importance value, and importance representation type indication information. Here, the sliding window is a window previously configured to prevent the same value from being included among N importance values.

The at least one parameter may be a PDU set configuration ID, and the PDU set configuration ID may identify a combination of N which is a size of a sliding window, k which indicates a range of an importance value, and importance representation type indication information.

For example, the PDU set may be classified as a unit of a frame of video data, and in a case where the importance is represented by 4 bits, an I frame may be configured to have an importance of 0, and a B frame that does not affect other PDU sets may be configured to have an importance of 15. In addition, a P frame, a B frame, an I slice, a P slice, and a B slice referenced by other frames or slices may have a value in a range from 1 to 14 according to the types of frames or slices and the number of reference frames or slices. In addition, the value of the importance is designated as a different value according to the frame type, and may have a value that increases in the order of RASL, P-bidirectional, P-unidirectional, RADL, B-bidirectional, and B-unidirectional. In addition, the value of the importance is designated as a different value according to the frame type, and may have a value that increases in the order of RADL, P-bidirectional, P-unidirectional, RASL, B-bidirectional, and B-unidirectional. In addition, the value of the importance may be designated as a different value according to the slice type, and may have a larger value in the order of a PI slice, a PP slice, a PB slice, a BI slice, a BP slice, and a BB slice. Furthermore, for different frames having the same frame type, a corresponding frame may have a larger value when the number of other frames referencing the frame is smaller.

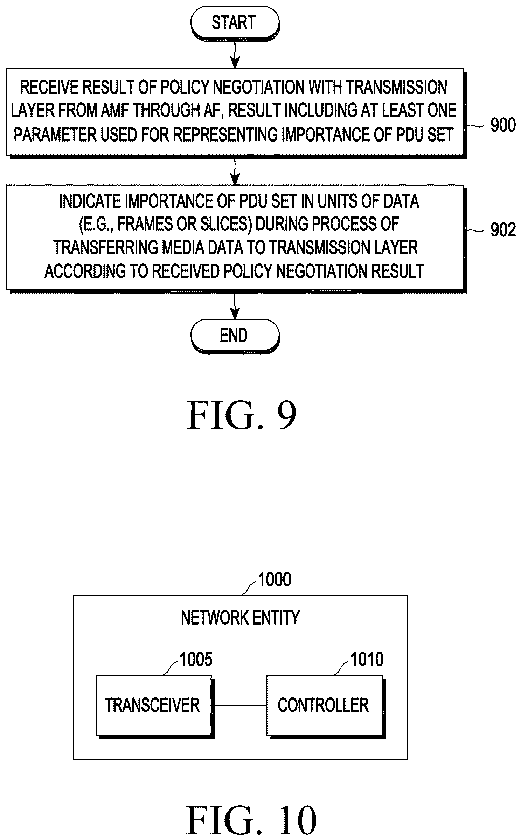

FIG. 9 is a diagram illustrating an example of a method of transferring, by a 5GMS AS, media data to a transmission layer, based on the importance of a PDU set according to the disclosure.

An AS may receive a result of policy negotiation with a transmission layer from an AMF through an AF (operation 900 or 630). The AS may be a 5GMS AS. The result may include at least one parameter used for representing importance of a PDU set.

The AS may indicate the importance of a PDU set in units of data (e.g., frames or slices) during a process of transferring media data to a transmission layer entity of the AS according to the received policy negotiation result (operation 902).

The at least one parameter included in the policy negotiation result may include N which is a size of a sliding window, k which indicates a range of an importance value, and importance representation type indication information. Here, the sliding window is a window previously configured to prevent the same value from being included among N importance values.

The at least one parameter may be a PDU set configuration ID, and the PDU set configuration ID may identify a combination of N which is a size of a sliding window, k which indicates a range of an importance value, and importance representation type indication information.

For example, the PDU set may be classified as a unit of a frame of video data, and in a case where the importance is represented by 4 bits, an I frame may be configured to have an importance of 0, and a B frame that does not affect other PDU sets may be configured to have an importance of 15. In addition, a P frame, a B frame, an I slice, a P slice, and a B slice referenced by other frames or slices may have a value in a range from 1 to 14 according to the types of frames or slices and the number of reference frames or slices. In addition, the value of the importance is designated as a different value according to the frame type, and may have a value that increases in the order of RASL, P-bidirectional, P-unidirectional, RADL, B-bidirectional, and B-unidirectional. In addition, the value of the importance is designated as a different value according to the frame type, and may have a value that increases in the order of RADL, P-bidirectional, P-unidirectional, RASL, B-bidirectional, and B-unidirectional. In addition, the value of the importance may be designated as a different value according to the slice type, and may have a larger value in the order of a PI slice, a PP slice, a PB slice, a BI slice, a BP slice, and a BB slice. Furthermore, for different frames having the same frame type, a corresponding frame may have a larger value when the number of other frames referencing the frame is smaller.

FIG.10 illustrates a device structure of a network entity according to the disclosure.

The network entity device illustrated in FIG. 10 may be an entity (AMF, AF, AS, UE, or the like) device in various networks, illustratively described in the disclosure.

The network entity 1000 may include a transceiver 1005 which performs signal transmission and reception with other network entities, and a controller 1010 which controls the overall operation of the network entity 1000. It will be appreciated that all the methods performed by entities, such as an AMF, an AF, an AS, and a UE, are performed under the control of the controller 1010.

Of course, the controller 1010 and the transceiver 1005 are not necessarily implemented as separate devices, but may be implemented as a single component unit such as a single chip. The controller 1010 may be implemented as one processor in the network entity 1000.

It should be noted that system configuration diagrams, method illustrations, and signal flowcharts illustrated in FIGS. 1 to 10 are not intended to limit the scope of protection of the disclosure. That is, all the constituent units or operation steps shown in FIGS. 1 to 10 should not be construed as essential elements for implementing the disclosure, and even when including only some of the elements, the disclosure may be implemented without impairing the true nature of the disclosure.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for supporting, by an application function (AF), processing of a protocol data unit (PDU) session, based on importance of a PDU set, in a wireless communication system, the method comprising:
transmitting a request message for a PDU session to a first entity in a 5G system (5GS); and
receiving a response message from the first entity, in response to the request message,
wherein the request message comprises at least one parameter that represents importance of a PDU set, and
wherein a value of the importance is one integer determined in a range of 0 to 15, based on a frame type of the PDU set.

2. The method of claim 1, wherein the value of the importance is one integer determined in a range of 1 to 14, and a random absolute value is assigned to each of a most important frame and a least important frame among frame types of the PDU set.

3. The method of claim 2, wherein the value of the importance is determined to be smaller as importance of the frame type of the PDU set increases.

4. The method of claim 3, wherein an importance value in case that the frame type is instantaneous decoding refresh (IDR) or clean random access (CRA) is determined as a smaller integer than an importance value in case that the frame type is random access decodable leading (RADL).

5. The method of claim 3, wherein an importance value in case that the frame type is a frame type referenced by another frame is determined as a smaller integer than an importance value in case that the frame type is a frame type not referenced by another frame.

6. The method of claim 1, wherein the first entity is an access & mobility management function (AMF).

7. An application function (AF) device for supporting processing of a protocol data unit (PDU) session, based on importance of a PDU set, in a wireless communication system, the AF device comprising:
a transceiver; and
a processor configured to control the transceiver,
wherein the processor is configured to transmit a request message for a PDU session to a first entity in a 5G system (5GS), and receive a response message from the first entity, in response to the request message,
wherein the request message comprises at least one parameter that represents importance of a PDU set, and
wherein a value of the importance is one integer determined in a range of 0 to 15, based on a frame type of the PDU set.

8. The device of claim 7, wherein the value of the importance is one integer determined in a range of 1 to 14, and a random absolute value is assigned to each of a most important frame and a least important frame among frame types of the PDU set.

9. The device of claim 8, wherein the value of the importance is determined to be smaller as importance of the frame type of the PDU set increases.

10. The device of claim 9, wherein an importance value in case that the frame type is instantaneous decoding refresh (IDR) or clean random access (CRA) is determined as a smaller integer than an importance value in case that the frame type is random access decodable leading (RADL).

11. The device of claim 9, wherein an importance value in case that the frame type is a frame type referenced by another frame is determined as a smaller integer than an importance value in case that the frame type is a frame type not referenced by another frame.

12. A method for supporting, by a first entity, processing of a protocol data unit (PDU) session, based on importance of a PDU set, in a wireless communication system, the method comprising:
receiving a request message for a PDU session from an application function (AF);
and
transmitting a response message to the AF, in response to the request message,
wherein the request message comprises at least one parameter used to represent importance of a PDU set, and
wherein a value of the importance is one integer determined in a range of 0 to 15, based on a frame type of the PDU set.

13. The method of claim 12, wherein the value of the importance is one integer determined in a range of 1 to 14, and a random absolute value is assigned to each of a most important frame and a least important frame among frame types of the PDU set.

14. The method of claim 13, wherein the value of the importance is determined to be smaller as importance of the frame type of the PDU set increases.

15. A first entity device for supporting processing of a protocol data unit (PDU) session, based on importance of a PDU set, in a wireless communication system, the first entity device comprising:
a transceiver; and
a processor configured to control the transceiver,
wherein the processor is configured to receive a request message for a PDU session from an application function (AF), and transmit a response message to the AF, in response to the request message,
wherein the request message comprises at least one parameter used to represent importance of a PDU set, and
wherein a value of the importance is one integer determined in a range of 0 to 15, based on a frame type of the PDU set.
